# EUROPÄISCHE PATENTSCHRIFT

(11) **EP 0 747 306 B1**
(45) Veröffentlichungstag und Bekanntmachung des Hinweises auf die Patenterteilung: **23.12.1998**
(21) Anmeldenummer: 96105867.4
(22) Anmeldetag: 15.04.1996
(51) Int. Cl.: B65G 67/06, B65B 39/00

(54) **Vorrichtung zum Kuppeln von Behältnissen mit Blas- und Absaugeinrichtung**
Coupling device for containers with a blast and suction device
Dispositif pour raccorder des récipients avec une installation de soufflage et d'aspiration

(30) Priorität: 09.06.1995 DE 19520409
(43) Veröffentlichungstag der Anmeldung: 11.12.1996
(73) Patentinhaber: GEI GmbH, 79379 Müllheim (DE)
(72) Erfinder: Grau, Gerhard, Dipl.-Ing., 79379 Müllheim/Baden (DE); Koch, Martin, Dipl.-Ing. (FH), 79379 Neuenburg/Baden (DE); Unth, Günter, 79379 Müllheim/Baden (DE)
(74) Vertreter: Goddar, Heinz J., Dr.

(56) Entgegenhaltungen:
- DE-C- 4 342 962

## Beschreibung

Die Erfindung betrifft eine Vorrichtung zum Kuppeln von zwei jeweils einen Anschluß-Rohrstutzen mit im wesentlichen kreisförmigem Querschnitt aufweisenden Behältnissen nach dem Oberbegriff des Patentanspruches 1.

Aus der DE 43 42 962 C1 ist eine Vorrichtung dieser Art bekannt, die sich in der Praxis durchaus bewährt hat.

Der Erfindung liegt die Aufgabe zugrunde, die gattungsgemäße Vorrichtung dahingehend weiterzubilden, daß die Reinigung der Reinigungsklappen vor und/oder nach dem mittels der Vorrichtung zu bewerkstelligenden Umfüllvorgang durch früher einsetzendes bzw. später endendes Bilden bzw. Öffnen der Stoßkammer verbessert wird.

Erfindungsgemäß wird diese Aufgabe durch die Merkmalskombination des Patentanspruches 1 gelöst.

Bevorzugte Ausführungsformen der Erfindung sind Gegenstand der Unteransprüche. Bei der Erfindung kann entsprechend dem gattungsgemäßen Stand der Technik insbesondere auch vorgesehen sein, daß die Schließklappen in je einem im wesentlichen kreisförmigen, einen Bestandteil der Randdichtung bildenden Dichtwulst derartiger Querschnittskonfiguration gelagert sind, daß die kreisringförmige Stirnfläche des jeweiligen Rohrstutzens in einem Zustand, in dem die zugeordnete Schließklappe geschlossen und der andere Rohrstutzen nicht angedrückt ist, von dem gleichzeitig die betreffende Schließklappe dicht lagernden Dichtwulst derart abgedeckt ist, daß eine dem Rohrstutzen abgewandte Stirndichtfläche des jeweiligen Dichtwulstes schräg radial nach außen in Richtung auf den anzuschließenden anderen Rohrstutzen ansteigt, wobei die Stirndichtflächen eine derartige Abschrägung nach außen auf den jeweils anderen Rohrstutzen hin aufweisen, daß die Stoßkammer bei Annäherung und/oder beim Entfernen der Stirnflächen der beiden Rohrstutzen aneinander bzw. voneinander wesentlich vor bzw. nach dem In-Kontakt-Kommen bzw. Außer-Kontakt-Kommen der beiden Schließklappen abgedichtet bzw. geöffnet wird.

Auch kann bei der Erfindung wie beim gattungsgemäßen Stand der Technik insbesondere vorgesehen sein, daß die Blaseinrichtung und die Absaugeinrichtung an dem die aktive Schließklappe tragenden Rohrstutzen angeordnet sind.

Der Erfindung liegt die überraschende Erkenntnis zugrunde, daß es gelingt, ein einwandfreies Reinigen der Schließklappen von Ablagerungen insbesondere des Umfüllproduktes zu erzielen, indem unter Zuhilfenahme der beanspruchten Dichtmanschette für eine zuverlässige Abdichtung der Stoßkammer sowohl vor dem InKontakt-Kommen der Schließklappen als auch vorzugsweise insbesondere nach dem Außer-Kontakt-Kommen der Schließklappen, also nach dem Umfüllvorgang, gewährleistet wird. Hierdurch lassen sich beispielsweise abgelagerte Partikel unter Vermeidung jedweder Umweltverschmutzung wieder in den Produktstrom zurückführen.

Die den Schließklappen zugeordneten Dichtungen sind erfindungsgemäß gegenüber dem Stand der Technik derart modifiziert, daß diese Dichtungen bei einem Abstand der Schließklappen von vorzugsweise weniger als ca. 15 mm den zwischen den Schließklappen befindlichen Raum, also die Stoßkammer, mit Ausnahme der Bereiche der Lagerschalen nach außen hin abdichten. Der in der aktiven Schließklappe zur Antriebsseite hin befindliche Zentrierstift ist vorzugsweise als Luftdüse ausgebildet und weist zwei Luftaustrittsöffnungen auf, die in Richtung der verunreinigten Dichtlinie zwischen der Schließklappe und der Dichtung verlaufen. Hiermit werden zwei im wesentlichen tangential verlaufende, halbkreisringförmige Luftströme erzeugt, die sich an der dem Antrieb diametral gegenüberliegenden Seite wieder treffen, und zwar an der Stelle, die durch die Randdichtung nicht mehr abgedeckt ist. Hier befindet sich vorzugsweise ein Absaugstutzen, der die ankommende verunreinigte Blasluft auffängt und der Zentralabsaugung zuführt.

Weitere Merkmale und Vorteile der Erfindung ergeben sich aus der nachstehenden Beschreibung, anhand der schematischen Zeichnungen.

Dabei zeigt:
- Fig. 1: einen Schnitt durch die Längsmittelachse von zwei zu kuppelnden Rohrstutzen in einem noch nicht gekuppelten Funktionszustand;
- Fig. 2: eine Randdichtung eines Rohrstutzens der Vorrichtung gemäß Fig. 1 im Schnitt durch die Längsmittelachse eines Rohrstutzens im noch nicht angekuppelten Funktionszustand;
- Fig. 3: in Fig. 2 entsprechender Darstellung zwei aneinandergekuppelte Rohrstutzen im noch nicht vollständig zusammengefahrenen Zustand;
- Fig. 4: ein Teil der Vorrichtung in der Draufsicht auf eine Schließklappe, von dem anderen Rohrstutzen her gesehen; und
- Fig. 5: einen Längsschnitt entsprechend Fig. 2 durch zwei aneinandergekuppelte Rohrstutzen bei einem Ausführungsbeispiel der Erfindung.

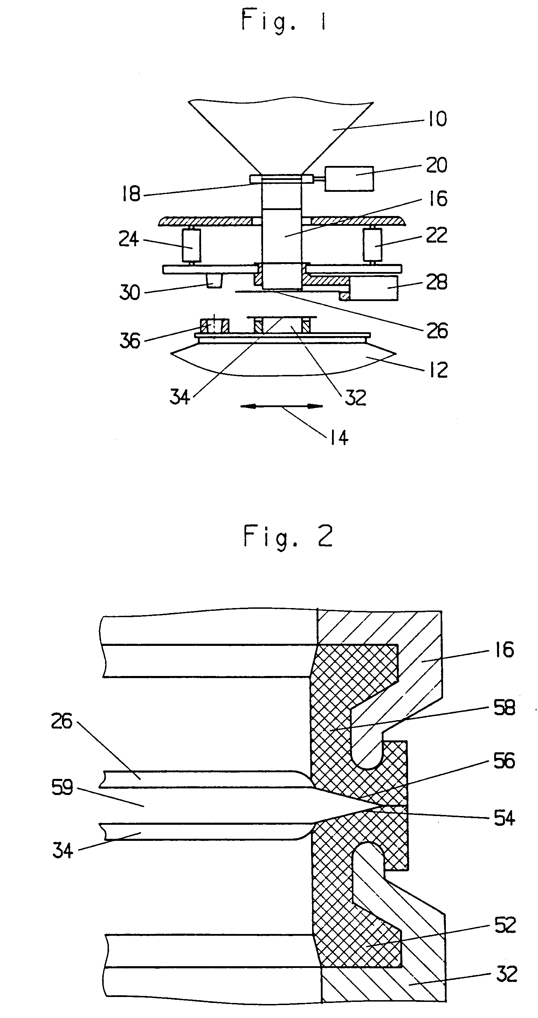

Die Figuren 1 bis 4 zeigen die erfindungsgemäße Vorrichtung ohne Umfangsdichtmanschette nicht und dieren zur Erläuterung des Erfindungsgegenstands.

In Fig. 1 sind zwei Behältnisse dargestellt, die zum Überführen eines Produktes aus dem Behältnis 10 in das Behältnis 12 miteinander gekuppelt werden sollen. Das Behältnis 10 ist ein feststehender Container, das Behältnis 12 ein in Richtung eines Pfeiles 14 von der Seite her unter das Behältnis 10 verfahrbarer Transportbehälter.

Das Behältnis 10 weist an seinem unteren Ende einen Rohrstutzen 16 auf, der gegenüber dem eigentlichen Volumen des Behältnisses 10 durch eine Sperreinrichtung 18, welche mittels eines Sperrantriebes 20 geöffnet und geschlossen werden kann, in Verbindung steht. Durch Pneumatikzylinder 22, 24 ist der Rohrstutzen 16 in seiner Höhe verstellbar. Am in Fig. 1 unteren Ende des Rohrstutzens 16 befindet sich eine erste Schließklappe 26, die, wie weiter unten noch erläutert wird, mittels eines Schwenkantriebes 28 aus einer die in Fig. 1 unten liegende stirnseitige Öffnung des Rohrstutzens 16 verschließenden Schließstellung unter Verschwenken um 90° um eine in Durchmesserrichtung bezüglich des Rohrstutzens 16 liegende Schwenkachse in ihre Öffnungsstellung gebracht werden kann.

Fig. 1 läßt weiterhin erkennen, daß mit dem Rohrstutzen 16 eine Zentrierbohrung 36 verbunden ist.

Das in Richtung des Pfeiles 14 durch seitliche Verschiebung in Fig. 1 unter das Behältnis 10 gefahrene Behältnis 12 weist an seiner oberen Seite einen zum ersten Rohrstutzen 16 komplementären zweiten Rohrstutzen 32 auf, der an seiner dem Behältnis 10 zugewandten Stirnseite eine zweite Schließklappe 34 trägt, die, wie weiter unten noch erläutert wird, in ähnlicher Weise wie die erste Schließklappe 26 durch Verschwenken um 90° aus einer Schließ- in eine Offenstellung gebracht werden kann. An dem Behältnis 12 ist ein Zentrierstift 30 angeordnet, der zum Zusammenwirken mit der Zentrierbohrung 36 bestimmt ist. An den Schließklappen 26, 34 sind Feinzentriereinrichtungen in Form mindestens eines weiteren Zentrierstiftes und mindestens einer weiteren, damit zusammenwirkenden Zentrierbohrung vorgesehen, welche nach einem Grobzentrieren, welches durch das Zusammenwirken des Zentrierstiftes 30 mit der Zentrierbohrung 36 bewirkt wird, ein exaktes gegenseitiges Zentrieren der ersten Schließklappe 26 und der zweiten Schließklappe 34 ermöglichen.

Fig. 2 läßt erkennen, daß die Schließklappe 34 des zweiten Rohrstutzens 32 in der in Fig. 2 gezeigten Schließstellung, in der noch kein Andrücken des ersten Rohrstutzens 16 (nicht gezeichnet) erfolgt ist, mit ihrem Umfangsrand durch einen Dichtwulst 52 abgedichtet wird. Der Dichtwulst 52 weist eine schräg radial nach außen ansteigende ringförmige Stirndichtfläche 54 auf. Der Dichtwulst 52 besteht insgesamt aus elastischem Material.

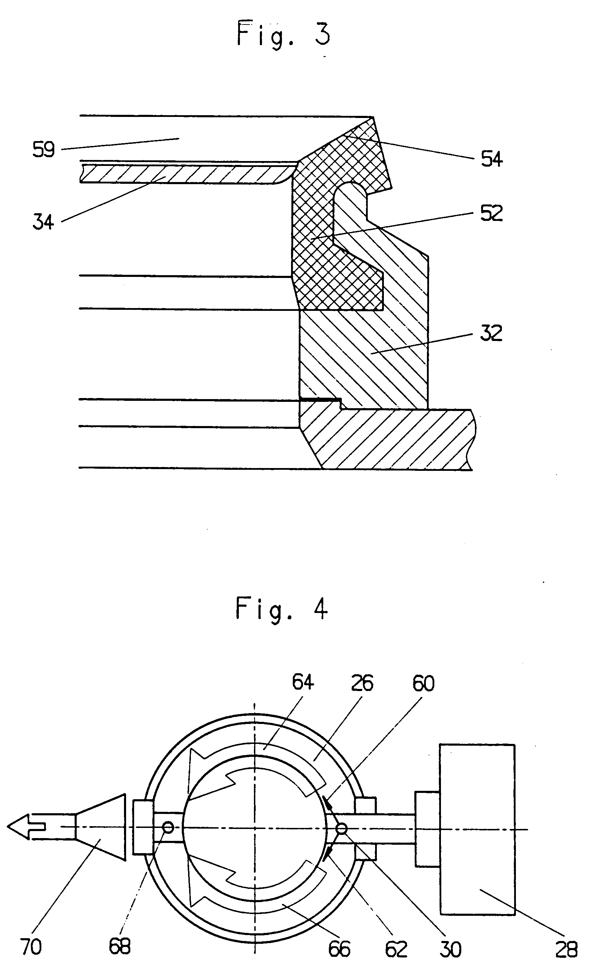

Wird, wie in Fig. 3 gezeigt, der erste Rohrstutzen 16 an den zweiten Rohrstutzen 32 herangefahren, so kommt die Stirndichtfläche 54 des Dichtwulstes 52 mit einer Stirndichtfläche 56 eines anderen Dichtwulstes 18 bereits sehr frühzeitig in Kontakt, bedingt durch die Schrägstellung der Stirndichtflächen 54, 56. Eine Stoßkammer 59 wird demzufolge in einem Zustand, in dem die Schließklappen 26, 34 noch nicht aneinanderliegen, abgedichtet, so daß bereits in diesem Zustand, also entweder bei Annäherung der Rohrstutzen 16, 32 oder bei entsprechendem Auseinanderfahren beim Abkuppeln, also nach erfolgtem Umfüllvorgang, eine entsprechende Reinigung der Stoßkammer 59 mittels einer Blaseinrichtung, die nachstehend noch beschrieben wird, erfolgen kann.

Fig. 4 zeigt den Aufbau der Blaseinrichtung. Wie hier zu erkennen ist, ist der Zentrierstift 30 als Blaseinrichtung mit zwei Luftaustrittsöffnungen 60, 62 ausgebildet, die zwei tangential-halbkreisringförmig verlaufende Luftströme 64, 66 bilden. Mittels eines dem Zentrierstift 30 gegenüberliegenden Absaugstutzens 68 wird die Blasluft einer Zentralabsaugung 70 zugeführt.

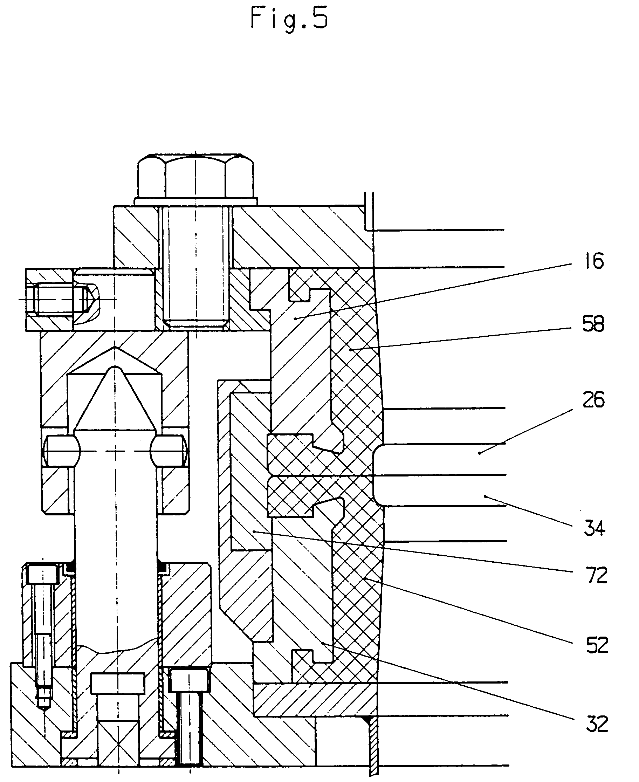

Fig. 5 zeigt die erfindungsgemäße an dem Rohrstutzen 32 angebrachte Umfangs-Dichtmanschette 72, die in einem Funktionszustand, in dem die Schließklappen 26, 34 - 26 ist die aktive Schließklappe - noch nicht bzw. nicht mehr aneinanderliegen, ein dichtendes Eintauchen des Rohrstutzens 16 gewährleistet, so daß dann also die Stoßkammer 59 (in Fig. 5 nicht gezeigt, aber zwischen den Schließklappen 26 und 34 zu denken) mittels der Dichtmanschette 72 abgedichtet ist, ohne daß es während des Blas- und Absaugungsvorganges zur Abdichtung der Stoßkammer 59 einer Mitwirkung der Dichtwülste 52, 58 bedürfte.

### Bezugszeichenliste

- 10 =: Behältnis
- 12 =: Behältnis
- 14 =: Pfeil
- 16 =: erster Rohrstutzen
- 18 =: Sperreinrichtung
- 20 =: Sperrantrieb
- 22 =: Pneumatikzylinder
- 24 =: Pneumatikzylinder
- 26 =: erste Schließklappe
- 28 =: Schwenkantrieb
- 30 =: Zentrierstift
- 32 =: zweiter Rohrstutzen
- 34 =: zweite Schließklappe
- 36 =: Zentrierbohrung
- 52 =: Dichtwulst
- 54 =: Stirndichtfläche
- 56 =: Stirndichtfläche
- 58 =: Dichtwulst
- 59 =: Stoßkammer
- 60 =: Gasaustrittsöffnung
- 62 =: Gasaustrittsöffnung
- 64 =: Luftstrom
- 66 =: Luftstrom
- 68 =: Absaugstutzen
- 70 =: Zentralabsaugung
- 72 =: Dichtmanschette

## Patentansprüche

1. Vorrichtung zum Kuppeln von zwei jeweils einen Anschluß-Rohrstutzen mit im wesentlichen kreisförmigem Querschnitt aufweisenden Behältnissen, wobei jeder der Rohrstutzen (16, 32) nahe seinem dem ihn tragenden Behältnis abgewandten Ende eine um einen Durchmesser des Rohrstutzens um im wesentlichen 90° schwenkbare, mit ihrem Außendurchmesser im wesentlichen dem Innendurchmesser des Rohrstutzens entsprechende Schließklappe (26, 34) mit im wesentlichen kreisförmigem Querschnitt aufweist, die aus einer Schließstellung, in der sie im wesentlichen quer zur Längsmittelachse des betreffenden Rohrstutzens steht, in eine Offenstellung, in der sie im wesentlichen parallel zur Längsmittelachse des betreffenden Rohrstutzens (16, 32) steht, mittels eines Schwenkantriebs (28) überführbar ist, wobei die Schließklappen mittels jeweils einer im Querschnitt im wesentlichen halbkreissektorförmigen Halbachse, deren ebene, dem den jeweiligen Rohrstutzen tragenden Behältnis abgewandte Stirnfläche im wesentlichen mit der dem betreffenden Behältnis abgewandten Stirnfläche der betreffenden Schließklappe fluchtet und die mit der jeweiligen Schließklappe (26, 34) fest verbunden sind, derart in jeweils zwei diametral einander gegenüberliegenden, zur jeweiligen Halbachse komplementären Lagerschalen, die sich zur Stirnfläche (54, 56) des betreffenden Rohrstutzens öffnen, gelagert sind, daß die Stirnflächen in Schließstellung mit der Stirnfläche des betreffenden Rohrstutzens fluchten, wobei ferner nur eine der Halbachsen unmittelbar durch den Schwenkantrieb beaufschlagbar ist, wobei weiterhin beide Schließklappen (26, 34) nach zentriertem Aneinanderdrücken der Stirnflächen (54, 56) der Rohrstutzen mittels des Schwenkantriebes (28) unter Mitnehmen der nicht unmittelbar angetriebenen Schließklappe um eine aus den beiden Halbachsen gebildete Vollachse zwischen ihrer Schließ- und ihrer Offenstellung in dem aus den beiden Lagerschalen gebildeten Lager verschwenkbar sind, wobei außerdem mindestens eine der Schließklappen (26, 34) eine Blaseinrichtung zum Beaufschlagen einer zwischen den aufeinandergedrückten Schließklappen sich bildenden Stoßkammer (59) mit Reinigungs- und/oder Schutzgas aufweist, wobei weiterhin der Blaseinrichtung eine das in die Stoßkammer (59) eingeleitete Reinigungs- und/oder Schutzgas aufnehmende Absaugeinrichtung zugeordnet ist, wobei ferner die Schließklappen in einer im wesentlichen kreisringförmigen Randdichtung (52, 58) gelagert sind, und wobei die Randdichtung derart ausgebildet ist, daß die Stoßkammer (59) bei Annäherung und/oder beim Entfernen der Stirnflächen (54, 56) der beiden Rohrstutzen aneinander bzw. voneinander wesentlich vor bzw. nach dem In-Kontakt-Kommen bzw. Außer-Kontakt-Kommen der beiden Schließklappen (26, 34) abgedichtet bzw. geöffnet wird, dadurch gekennzeichnet, daß einer (32) der beiden Rohrstutzen (16, 32) eine Umfangs-Dichtmanschette (72) aufweist, in die bei Annäherung der Stirnflächen der beiden Rohrstutzen (16, 32) aneinander der andere (16) der beiden Rohrstutzen (16, 32) dichtend eintaucht.

2. Vorrichtung nach Anspruch 1, dadurch gekennzeichnet, daß die Stoßkammer (59) bei der Annäherung und/oder beim Entfernen der Stirnflächen der beiden Rohrstutzen (16, 32) aneinander bzw. voneinander etwa 15 mm vor dem In-Kontakt-Kommen bzw. etwa 15 mm nach dem Außer-Kontakt-Kommen der beiden Schließklappen (26, 34) abgedichtet bzw. geöffnet wird.

3. Vorrichtung nach Anspruch 1 oder 2, dadurch gekennzeichnet, daß die Blaseinrichtung zumindest teilweise duch eine Zentrierbohrung (36) eines (16) der beiden Rohrstutzen (16, 32) gebildet ist.

4. Vorrichtung nach einem der vorangehenden Ansprüche, dadurch gekennzeichnet, daß die Blaseinrichtung (30) zwei Gasaustrittsöffnungen (60, 62) zur Erzeugung je eines im wesentlichen halbkreisringförmigen Gasstromes (64, 66) aufweist.

5. Vorrichtung nach einem der vorangehenden Ansprüche, dadurch gekennzeichnet, daß die Blaseinrichtung (30) und die Absaugeinrichtung (68) an im wesentlichen diametral gegenüberliegenden Umfangspositionen eines (16) der beiden Rohrstutzen (16, 32) angeordnet sind.

## Claims

1. A device for coupling two containers each having a connecting spigot of substantially circular cross-section, each spigot (16, 32) having, near its end remote from the container bearing it, a closure flap (26, 34) of substantially circular cross-section pivotable around a diameter of the spigot through an angle of substantially 90°, said flap having an outside diameter corresponding substantially to the inside diameter of the spigot and being adapted to be moved by means of a pivoting drive (28) form a closed position, in which it is situated substantially transversely of the longitudinal central axis of the respective spigot, into an open position, in which it is situated substantially parallel to the longitudinal central axis of the respective spigot (16, 32), the closure flaps being so mounted, each by means of a half spindle, of substantially semicircular sector shape in cross-section, the flat end face of which remote from the container bearing the respective spigot is substantially in alignment with the end face of the respective closure flap remote from the respective container and which are rigidly connected to the respective closure flap (26, 34), in two bearing bushes in each case, which are situated diametrically opposite one another and which are complementary with the respective half spindle and which open out to the end face (54, 56) or the respective spigot, that the end faces in the closed position are in alignment with the end face of the respective spigot, and wherein further only one of the half spindles is adapted to be actuated to be actuated directly by the pivoting drive and wherein furthermore both closure flaps (26, 34), after the end faces (54, 56) of the spigots have been pressed against one another with centring, are pivotable by means of the pivoting drive (28), the closure flap which is not directly driven being entrained, about a full spindle formed by the two half spindles, between their closed and their open position, in the bearing formed by the two bearing bushes, and wherein also at least one of the closure flaps (26, 34) has a blast device for applying cleaning and/or protective gas to a junction chamber (59) forming between the closure flaps pressed one upon the other, and wherein furthermore there is associated with the blast device a suction extraction device which receives the cleaning and/or protective gas introduced into the junction chamber (59), and wherein further the closure flaps are mounted in an edge seal (32, 58) of substantially circular annular shape, and wherein the edge seal is so constructed that when the end faces (54, 56) of the two spigots approach one another or move away from one another the junction chamber (59) is sealed off or opened respectively before or after the two closure flaps (26, 34) come into contact or out of contact with one another, characterised in that one (32) of the two spigots (16, 32) has a peripheral sealing collar (72) into which, when the end faces of the two spigots (16, 32) approach one another, the other (16) of the two spigots (16, 32) sealingly penetrates.

2. A device according to claim 1, characterised in that when the end faces of the two spigots (16, 32) approach one another and/or move away from one another, the junction chamber (59) is sealed off or opened respectively about 15 mm before the two closure flaps (26, 34) come into contact or approximately 15 mm after the two closure flaps (26, 34) come out of contact respectively.

3. A device according to claim 1 or 2, characterised in that the blast device is formed at least partially by a centring bore (36) of one (16) of the two spigots (16, 32).

4. A device according to any one of the preceding claims, characterised in that the blast device (30) comprises two gas outlet ports (60, 62) each intended to produce a gas flow (64, 66) of substantially semicircular annular shape.

5. A device according to any one of the preceding claims, characterised in that the blast device (30) and the suction extraction device (68) are disposed at substantially diametrically opposite peripheral positions of one (16) of the two spigots (16, 32).

## Revendications

1. Dispositif de raccordement de deux récipients comportant chacun une tubulure de raccordement de section sensiblement circulaire, dans lequel chacune des tubulures (16, 32) comporte près de son extrémité éloignée du récipient qui la porte un volet obturateur (26, 34) qui peut pivoter d'environ 90° autour d'un diamètre de la tubulure, dont le diamètre extérieur correspond sensiblement au diamètre intérieur de la tubulure, qui a une section sensiblement circulaire et qui peut passer au moyen d'un mécanisme de pivotement (28) d'une position fermée, dans laquelle il est globalement transversal à l'axe central longitudinal de la tubulure (16, 32) concernée, à une position ouverte, dans laquelle il est globalement parallèle à l'axe central longitudinal de la tubulure (16, 32) concernée, dans lequel les volets obturateurs, au moyen à chaque fois d'un demi-axe dont la section est sensiblement en forme de secteur de demi-cercle, dont la face plane éloignée du récipient portant la tubulure considérée est sensiblement alignée avec la face, éloignée du récipient considéré, du volet obturateur considéré et qui est fixé au volet obturateur (26, 34) respectif, sont logés dans à chaque fois deux coquilles de coussinet qui sont diamétralement opposées l'une à l'autre, qui sont complémentaires du demi-axe respectif et qui s'ouvrent vers la face (54, 56) de la tubulure considérée, de telle sorte que les faces en position fermée sont alignées avec la face de la tubulure considérée, dans lequel, de plus, un seul des demi-axes peut être commandé directement par le mécanisme de pivotement, dans lequel en outre les deux volets obturateurs (26, 34), après que les faces (54, 56) des tubulures ont été appuyées l'une contre l'autre de manière centrée, peuvent pivoter, au moyen du mécanisme de pivotement (28) et en entraînent le volet obturateur non commandé directement, autour d'un axe entier formé par les deux demi-axes, entre leur position fermée et leur position ouverte dans le coussinet formé par les deux coquilles de coussinet, dans lequel en outre au moins l'un des volets obturateurs (26, 34) comporte un dispositif de soufflage pour alimenter en gaz de nettoyage et/ou en gaz protecteur une chambre de joint (59) se formant entre les volets obturateurs appuyés l'un contre l'autre, dans lequel, en outre, un dispositif d'aspiration recueillant le gaz de nettoyage et/ou le gaz protecteur introduit dans la chambre de joint (59) est associé au dispositif de soufflage, dans lequel de plus les volets obturateurs sont logés dans un joint de bordure (52, 58) sensiblement en forme d'anneau circulaire, et dans lequel le joint de bordure est conçu de telle sorte que la chambre de joint (59) lors du rapprochement et/ou de l'éloignement des faces (54, 56) des deux tubulures l'une par rapport à l'autre est rendue étanche ou est ouverte bien avant ou après la mise en contact ou la mise hors contact des deux volets obturateurs (26, 34), caractérisé en ce que l'une (32) des deux tubulures (16, 32) comporte une manchette d'étanchéité circonférentielle (72) dans laquelle l'autre (16) des deux tubulures (16, 32) s'enfonce en assurant l'étanchéité lorsque les faces des deux tubulures (16, 32) sont rapprochées.

2. Dispositif selon la revendication 1, caractérisé en ce que la chambre de joint (59) lors du rapprochement et/ou de l'éloignement des faces des deux tubulures (16, 32) l'une par rapport à l'autre est rendue étanche ou est ouverte environ 15 mm avant la mise en contact ou environ 15 mm après la mise hors contact des deux volets obturateurs (26, 34).

3. Dispositif selon la revendication 1 ou 2, caractérisé en ce que le dispositif de soufflage est formé au moins en partie par un trou centré (36) de l'une (16) des deux tubulures (16, 32).

4. Dispositif selon l'une des revendications précédentes, caractérisé en ce que le dispositif de soufflage (30) comporte deux orifices d'échappement de gaz (60, 62) pour produire à chaque fois un flux de gaz (64, 66) sensiblement en forme de moitié d'anneau circulaire.

5. Dispositif selon l'une des revendications précédentes, caractérisé en ce que le dispositif de soufflage (30) et le dispositif d'aspiration (68) sont placés dans des positions circonférentielles, approximativement diamétralement opposées, sur l'une (16) des deux tubulures (16, 32).
